# EUROPEAN PATENT SPECIFICATION

(11) **EP 2 289 785 B1**
(45) Date of publication and mention of the grant of the patent: **04.01.2012**
(21) Application number: 10168549.3
(22) Date of filing: 06.07.2010
(51) Int. Cl.: B62J 17/02, B62J 99/00

(54) **Motorcycle**
Motorrad
Motocyclette

(30) Priority: 27.08.2009 JP 2009196731
(43) Date of publication of application: 02.03.2011
(73) Proprietor: Honda Motor Co., Ltd., Tokyo 107-8556 (JP)
(72) Inventor: Inose, Koji c/o Honda R & D Co., Ltd., Saitama 351-0193 (JP); Nakanishi, Takafumi c/o Honda R & D Co., Ltd., Saitama 351-0193 (JP); Tomomatsu, Toshiharu c/o Honda R & D Co., Ltd., Saitama 351-0193 (JP); Kito, Genichi c/o Honda R & D Co., Ltd., Saitama 351-0193 (JP)
(74) Representative: Liska, Horst

(56) References cited:
- EP-A2- 2 168 856
- WO-A1-2006/035921
- JP-A- 8 011 762
- JP-U- 63 077 884

## Description

### Technical Field

This invention relates to a motorcycle, and more particularly to a motorcycle having a handlebar cover that covers a handlebar except grip parts thereof.

### Background Art

A motorcycle having a handlebar cover that covers a handlebar except grip parts thereof according to the preamble of claim 1 is known from JP 8-011762 A.

EP 2 168 856 A2, which document was post-published and has to be considered as state of the art pursuant to Article 54(3) EPC, discloses a motorcycle comprising a handlebar for vehicle steering, a handlebar cover that covers the handlebar except grip parts thereof, a head lamp that is fitted to a front part of the handlebar cover and has a lens surface of which an upper end is positioned behind a lower end and a meter unit that is fitted to a rear part of the handlebar cover at a distance from the head lamp and has a lens surface of which an upper end is positioned ahead of a lower end, wherein a pair of left and right sub-covers formed of other members than the handlebar cover and arranged adjoining the head lamp and the meter unit are provided, and the sub-covers are fitted to the handlebar cover with front ends thereof positioned adjacent to upper left and right ends of the head lamp and rear ends thereof positioned adjacent to upper left and right ends of the meter unit.

WO 2006/035921 A1 discloses a handle cover which includes a handle cover body and a sub-cover. The handle cover body is provided with a meter opening. The sub-cover is mounted to the handle cover body. The sub-cover covers an outer peripheral portion of an indicator surface of a meter unit and a peripheral edge of the meter opening.

JP 63-077884 U discloses a motorcycle having a handlebar cover that covers a handlebar except grip parts thereof, a head lamp that is fitted to a front part of the handlebar cover, a pair of left and right sub-covers which are fitted to the handlebar cover, and a wind screen supported by wind screen stays.

A saddle-mounting vehicle such as a motorcycle is equipped with a pipe-shaped handlebar extending to the left and right of the body as its steering handlebar. And this steering handlebar is covered by a handlebar cover including a front cover and a rear cover, arranged respectively toward the front and rear of the body, except at both left and right ends (grip parts). In creating a design characteristic for a motorcycle, the visual effect of the handlebar cover is very important, and various contrivances are required.

For instance, Japanese patent document No. JP 2007-030591 A discloses a handlebar cover in whose front cover lower level parts so shaped as to be lower than the parts to its left and right are formed in regions adjoining the left and right of the head lamp, and in whose planar view the left and right contours of these lower level parts of the front cover are so shaped as to be substantially continuous to the left and right contours of the upper wall of the rear cover.

### Technical Problem

The handlebar cover described in Japanese patent document No. JP 2007-030591 A is given continuity between the front cover and the rear cover by making continuous the contours of the lower level parts of the front cover and the upper wall of the rear cover, but a sense of integration lacks between the front cover and the rear cover on account of the conspicuous border line between the front cover and the rear cover, and moreover no consideration is given to achieving continuity or a sense of integration between the head lamp positioned toward the front cover and the meter unit positioned toward the rear cover, resulting in no more than a commonplace impression as the design of the handlebar cover area.

An object of this invention is to provide a motorcycle capable of providing a novel visual effect by achieving a sense of integration between the head lamp toward the front part and the meter unit toward the rear part of the handlebar cover.

### Solution to Problem

This object is achieved by a motorcycle having a handlebar cover that covers a handlebar except grip parts thereof according to claim 1.

The invention has its first characteristic in that, in a motorcycle including a handlebar for vehicle steering, a handlebar cover that covers the handlebar except grip parts thereof, a head lamp that is fitted to a front part of the handlebar cover and has a lens surface of which an upper end is positioned behind a lower end, and a meter unit that is fitted to a rear part of the handlebar cover at a distance from the head lamp and has a lens surface of which an upper end is positioned ahead of a lower end, wherein a pair of left and right sub-covers formed of other members than the handlebar cover and arranged adjoining the head lamp and the meter unit are provided, and the sub-covers are fitted to the handlebar cover with front ends thereof positioned adjacent to upper left and right ends of the head lamp and rear ends thereof positioned adjacent to upper left and right ends of the meter unit, and wherein a wind screen supported by wind screen stays arranged vertically penetrating the sub-covers is provided, and the wind screen stays have brackets joined to the bottom ends thereof, the brackets being linked to handlebar brackets joined on the handlebar side.

The invention also has its second characteristic in that the handlebar cover includes a front cover and a rear cover, a meter visor which is fitted between the head lamp and the meter unit, positioned at a distance from each other, with a front edge and a rear edge thereof positioned adjoining the head lamp and the meter unit, respectively, is provided, and the pair of left and right sub-covers are arranged to the left and right of the meter visor, respectively.

The invention also has its third characteristic in that the meter unit has front parts bulging out ahead to the left and right, the head lamp has rear parts bulging out behind to the left and right, and the sub-covers are fitted with the front ends thereof abutting on the rear parts of the head lamp and the rear ends thereof abutting on the front parts of the meter unit.

The invention also has its fourth characteristic in that the meter unit has an indicator displaying section disposed between the front parts bulging out ahead to the left and right, the meter visor includes a rear edge having a surface opposing an upper surface of the indicator displaying section, and multiple openings opposing individual displaying sections included in the indicator displaying section are formed in the rear edge.

The invention also has its fifth characteristic in that the meter visor has a rear surface expanding ahead upward from the rear edge and a front surface expanding ahead downward from the rear surface, and a dent having a surface of which the central part is a step behind both the left and right ends of the rear surface is formed in the rear surface.

### Advantageous Effects of Invention

According to the invention having the first characteristic, the head lamp and the meter unit arranged at a distance from each other in the front-to-rear direction of the body can present an appearance in which they are linked via sub-covers formed of a separate member from the handlebar cover, making it possible to produce a sense of integration design-wise between the head lamp and the meter unit. Especially the user of a motorcycle who often sees the handlebar cover from above the vehicle can be given a profoundly novel impression of appearance by using the novel idea of design technique to cause the head lamp and the meter unit to work in collaboration.

Also, according to the invention having the first characteristic, the handlebar cover can be adapted to the fitting or non-fitting of the wind screen by removing only the sub-covers from the handlebar cover to replace or work on it. Therefore, when the wind screen-fitted state is to be changed to the non-fitted state, there is no need to replace the whole handlebar cover, but the penetration holes of the wind screen stays can be restored by only replacing the sub-covers.

Also, according to the invention having the second characteristic, as the meter visor and the sub-covers are so disposed as to cover the border line between the front cover and the rear cover in a broad range, when the meter unit is seen from above the vehicle, there is an effect that the border line between the front cover and the rear cover is made inconspicuous.

Also, according to the invention having the third characteristic, as the external shapes of the meter unit and the head lamp are so formed as to have bulging-out parts of substantially the same shape and each of these bulging-out parts is positioned adjacent to a sub-cover, the external shape of the meter unit and the external shape of the head lamp can be given continuity, resulting in further emphasis of the sense of integration between the meter unit and the head lamp.

Also, according to the invention having the fourth characteristic, the meter unit can be made more compact by arranging the indicator displaying section in the space formed between the bulging-out parts of the meter unit. Further, as the indicator displaying section formed on the meter unit can be distinguished by the meter visor from the region in which the speedometer and other constituent elements of the meter unit are arranged, the handlebar area including the meter unit can be made more compact while improving the appearance from above the vehicle.

Also, according to the invention having the fifth characteristic, where the configuration is such that openings are provided on the front edge of the meter visor to make indications of the indicator displaying section visible, as the dent is formed by disposing the rear surface of the meter visor a step below toward the front part of the body, the visibility of the indicator displaying section from above can be prevented from being adversely affected, thereby making it possible to secure the visibility of the indicator displaying section.

### Brief Description of Drawings

Fig. 1 is a top view of the essential part of the motorcycle pertaining to one example of embodiment of the invention.
Fig. 2 is a left profile of the motorcycle pertaining to the example of embodiment of the invention.
Fig. 3 is a front perspective view of the essential part of the motorcycle pertaining to one example of embodiment of the invention.
Fig. 4 is a rear perspective view of the essential part of the motorcycle pertaining to one example of embodiment of the invention.
Fig. 5 is a left profile of the essential part of the motorcycle pertaining to the example of embodiment of the invention.
Fig. 6 is a rear perspective view of the essential part of the motorcycle excluding a meter visor.
Fig. 7 is a left front perspective view of the essential part of the motorcycle excluding a front cover.
Fig. 8 is a cross-sectional view of a boss for screw fitting formed in the front cover.
Fig. 9 is a cross-sectional view of an example of joint part between the front cover and a rear cover.
Fig. 10 is a cross-sectional view of the area in which the bosses of the front cover and the bosses of the rear cover oppose each other.
Fig. 11 is a front view of the meter unit.
Fig. 12 is a bottom view of the meter unit.
Fig. 13 is a cross-sectional view between arrows A and A in Fig. 11.
Fig. 14 is a cross-sectional view between arrows B and B in Fig. 11.
Fig. 15 is a cross-sectional view between arrows C and C in Fig. 11.
Fig. 16 is a cross-sectional view between arrows D and D in Fig. 11.
Fig. 17 is a cross-sectional view between arrows E and E in Fig. 11.
Fig. 18 is a cross-sectional view between arrows F and F in Fig. 11.
Fig. 19 is a perspective view of the rear left part of the meter visor.
Fig. 20 is a cross-sectional profile of the head lamp.

### Description of Embodiments

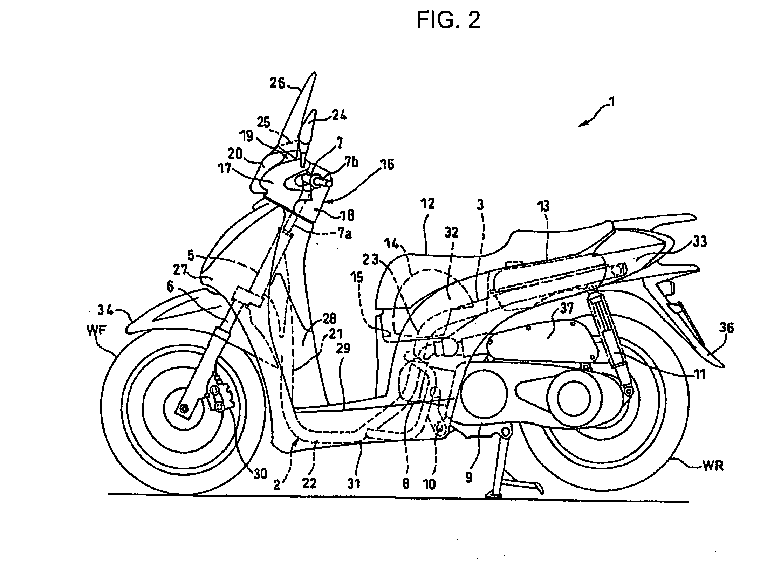

One example of embodiment of the invention will be described below with reference to drawings. Fig. 2 is a left profile of a scooter type motorcycle having a handlebar cover pertaining to the example of the invention. Incidentally, unless otherwise stated, the forward, backward, left, right and other directions in the following description are the same as the respectively corresponding ones of the vehicle.

In Fig. 2, the body frame of a motorcycle 1 has a main frame 2 and a seat rail 3. The main frame 2 is a U-profiled body having an upright part 21 whose forward end is joined to a head pipe 5 positioned in the forward part of the body, a horizontal part 22 extending horizontally from the upright part 21 and a slant part 23 extending back upward from the horizontal part 22. The forward end of the seat rail 3 is joined to the slant part 23 of this main frame 2.

The head pipe 5 rotatably supports a steering shaft 7a to whose lower end a front fork 6 is coupled, a front wheel WF is journaled to the lower end of the front fork 6, and a handlebar 7 is fitted to the upper end of the steering shaft 7a. A grip 7b is fitted to each of the two ends of the handlebar 7. Behind the main frame 2, a power unit 9 in front of which an engine 8 is provided is supported to be oscillable up and down by an axle 10, and the rear part of the power unit 9 is linked to a rear cushion 11 suspended from the seat rail 3.

The power unit 9 is provided with a transmission and a reduction gear, not shown, having known configurations for speed transmission and speed reduction, and a rear wheel WR is fitted to the output shaft (not shown) of the reduction gear. Tandem seats 12 integrally formed of a rider's seat and a pillion are mounted on the seat rail 3. Underneath the tandem seats 12 a fuel tank 13 is arranged, and also is arranged a store box 15 into which a helmet 14 can be stored.

The handlebar 7 is covered by a handlebar cover 16 all around except the grip parts at the left and right ends. The handlebar cover 16 has a front cover and a rear cover 18 to be described in detail afterwards, a head lamp 20 is built into the front cover 17, and a meter unit (to be described afterwards) is incorporated into the rear cover 18. The front cover 17 of the handlebar cover 16 has a head lamp opening for fitting the head lamp 20, and in the rear cover 18 a meter unit opening for fitting the meter unit is formed.

On the two sides (two flanks) of meter unit and the head lamp 20, a pair of left and right sub-covers 19 formed separately from the front cover 17 and the rear cover 18 are disposed. Namely, the front cover 17, the rear cover 18 and the sub-covers 19 are separate parts from one another. The sub-covers 19 are components that so extend in a range from the front cover 17 to the rear cover 18 that their front and rear ends adjoin the meter unit and the head lamp 20 arranged separately in the front and rear parts of the body.

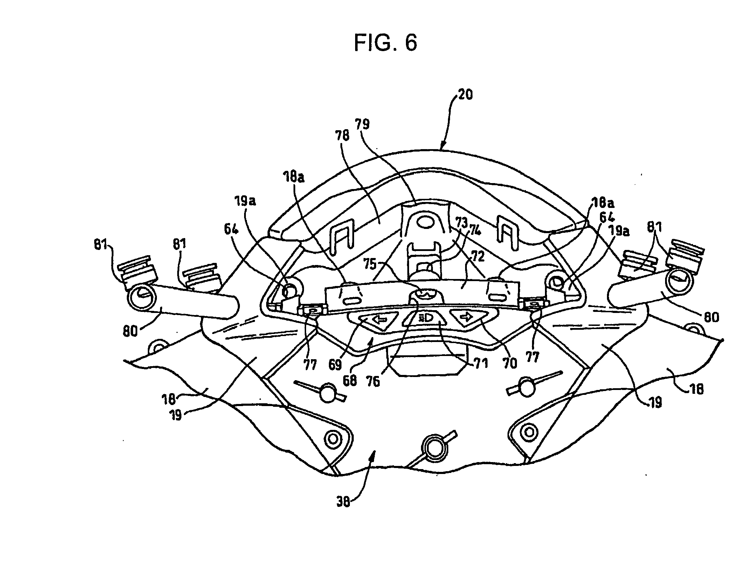

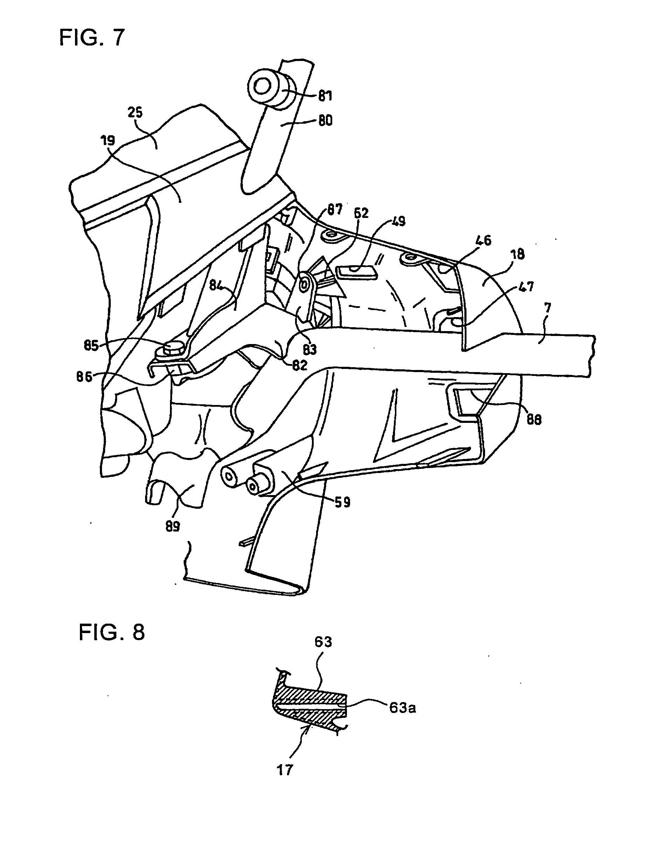

Mirrors 24 are arranged at the left and right ends of the front cover 17, and a wind screen 26 is arranged over a meter visor 25 that is in contact with the upper sides of the head lamp 20 and the meter unit. This wind screen 26 is fitted to a pair of left and right wind screen stays (to be described afterwards with reference to Figs. 6 and 7) disposed vertically penetrating the sub-covers 19.

A front cover 27 and a leg shield 28 partially surrounding the head pipe 5 and the main frame 2 are provided, and a step floor 29 and an under cover 31 surrounding the rest of the main frame 2 are provided. Also, body side covers 32 and a body rear cover 33 surrounding the seat rail 3 are provided.

A brake caliper 30 is disposed on the front fork 6. A front fender 34 is provided over the front wheel WF, and a rear fender 36 is provided over the rear wheel WR. An air cleaner 37 for cleaning the air let into the engine 8 is arranged above the power unit 9.

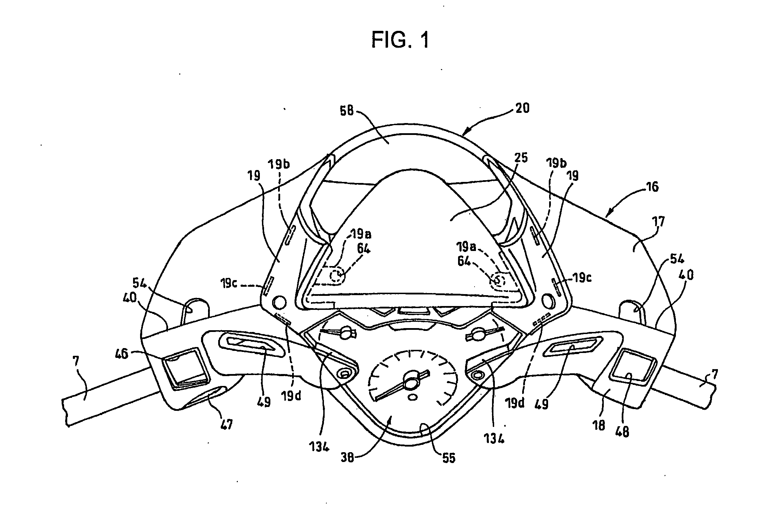

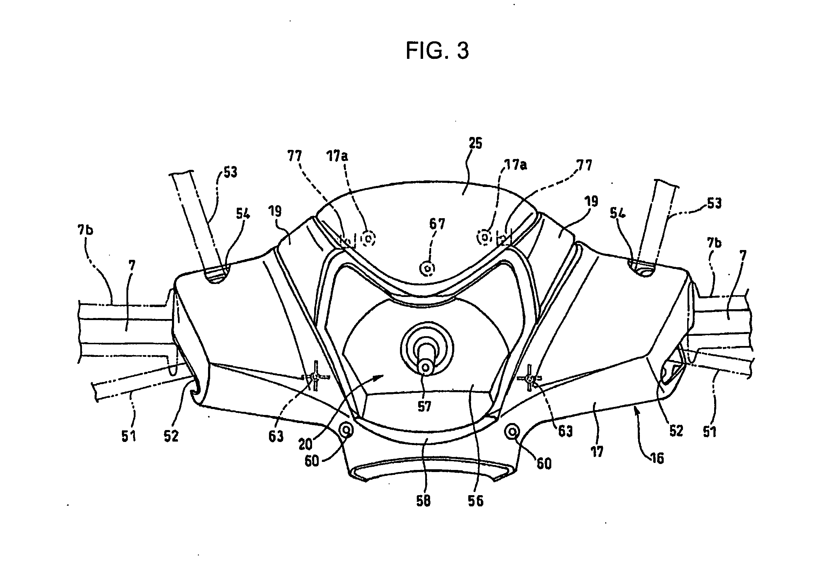

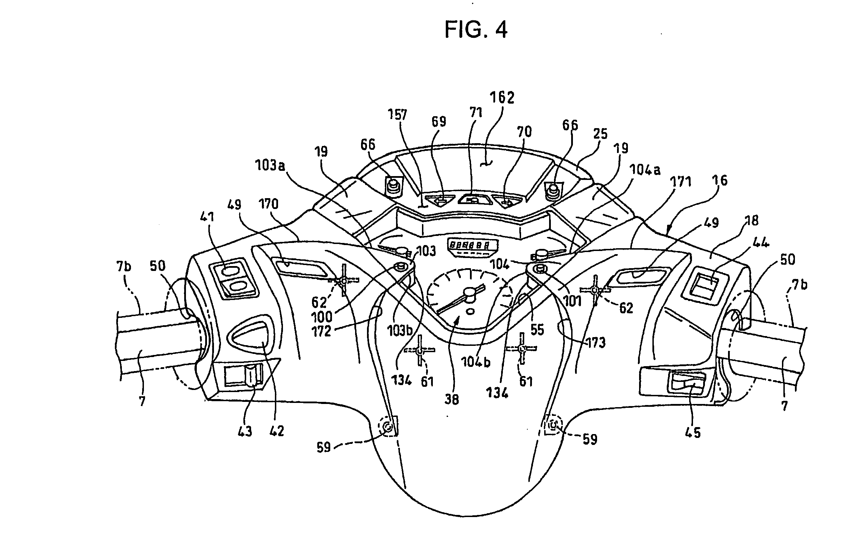

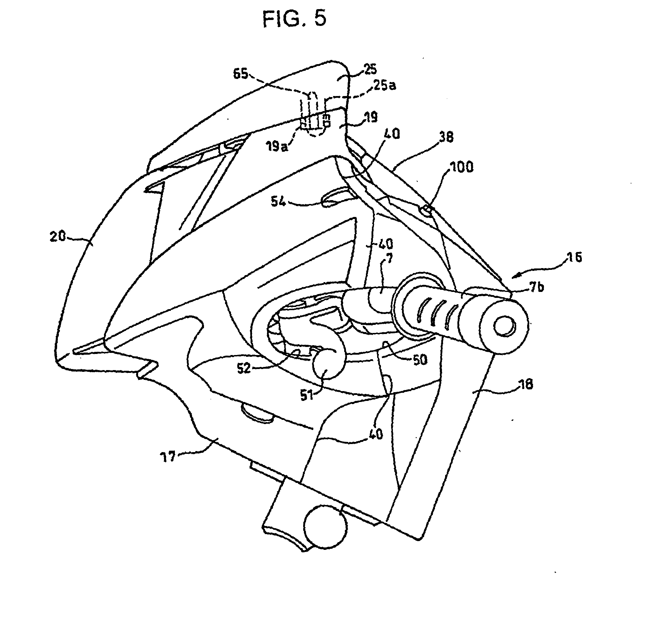

Next, the essential part of the motorcycle, namely the handlebar and the elements around it will be described in detail with reference to drawings. Fig. 1 is a top view of the essential part of the motorcycle 1 including the handlebar cover 16; Fig. 3, a front perspective view of the same; Fig. 4, a rear perspective view of the same; and Fig. 5, a left profile of the same. In these drawings, the same reference signs denote respectively the same parts. The handlebar cover 16 has the front cover 17 and the rear cover 18, and the sub-covers 19, the head lamp 20, a meter unit 38 and the meter visor 25 are fitted to the handlebar cover 16. The rear end of the front cover 17 and the front end of the rear cover 18 are butted against each other to constitute a border line 40 (see Fig. 1 and Fig. 5).

Further, as shown in Fig. 1, the left and right external side surfaces of the sub-covers 19 face the front cover 17 and the rear cover 18, and their front end surfaces oppose the left and right upper end surfaces of the head lamp 20. On the other hand, their left and right internal side surfaces face side surfaces of the meter visor 25, and their rear end surfaces oppose the left and right front end surfaces of the meter unit 38. In other words, the sub-covers 19 are arranged adjacent to the front and rear covers 17 and 18, the head lamp 20, the meter unit 38 and the meter visor 25.

Thus, some degree of integration is achieved among mutually separate components including the front cover 17 and the rear cover 18 constituting the handlebar cover 16 together with the head lamp 20, the meter unit 38 and the meter visor 25 by providing the sub-covers 19 which adjoin every one of them. In particular, by so positioning the front and rear parts of the sub-covers 19 as to abut face to face on the head lamp 20 and meter unit 38, a feel of integration can be given to these components arranged apart from each other in the front-to-rear direction of the body.

The border line 40 of the front cover 17 and the rear cover 18 form a peak (or an edge) line as the front inclined surface of the front cover 17 and the rear inclined surface of the rear cover 18 meet each other, and the sub-covers 19 also form a chevron having a peak in its profile (see Fig. 5).

In Fig. 4, on the left side part of the rear cover 18, a dimmer switch 41, a hom switch 42, and a turn signal switch 43 are provided in the descending order. Further, on the right side part of the rear cover 18, an engine stop switch 44 and a starter switch 45 are provided in the upper and lower positions, respectively. These switches 41 through 45 are so fitted that the manipulating elements of the switches are oriented backward, namely toward the rider sitting on the seat 12 through openings formed in the rear cover 18.

Fig. 1 shows the handlebar cover 16 before being fitted with the switches 41 through 45; out of the openings formed in the rear cover 18 to fit the switches 41 through 45, an opening 46 for the dimmer switch 41, an opening 47 for the hom switch 42 and an opening 48 for the engine stop switch 44 are seen. In the rear cover 18, openings 49 and 49 for checking the oil in a master cylinder (not shown) that supplies brake oil to a brake are formed.

Openings 50 for the handlebar are formed to enable the handlebar 7 to penetrate the left and right flanks of the rear cover 18 and to protrude on both the left and right sides (see Fig. 4). The grips 7b and 7b are fitted to the grip parts of the handlebar 7 (see Fig. 3).

Also, openings 52 for brake levers are formed to enable brake levers 51 to penetrate the left and right flanks of the front cover 17 as shown in Fig. 3 and Fig. 5 and to protrude on both left and right sides. Further, openings 54 permitting penetration of mirror stays 53 that support the mirrors 24 are formed behind the front cover 17. These openings are U-shaped, opening toward the border line 40.

The rear cover 18 has a V-shaped edge 55 which is narrow in the rear part (lower part in the drawings) and expanded in left-to-right width toward the forward part (upper part in the figures) as shown in Fig. 1 and Fig. 4 and, together with the edge of a bridge 72 (see Fig. 6) to be described afterwards, forms an opening for fitting the meter unit. And the meter unit 38 is so arranged as to keep its rear surface (lower flank in the figures) along this V-shaped edge 55.

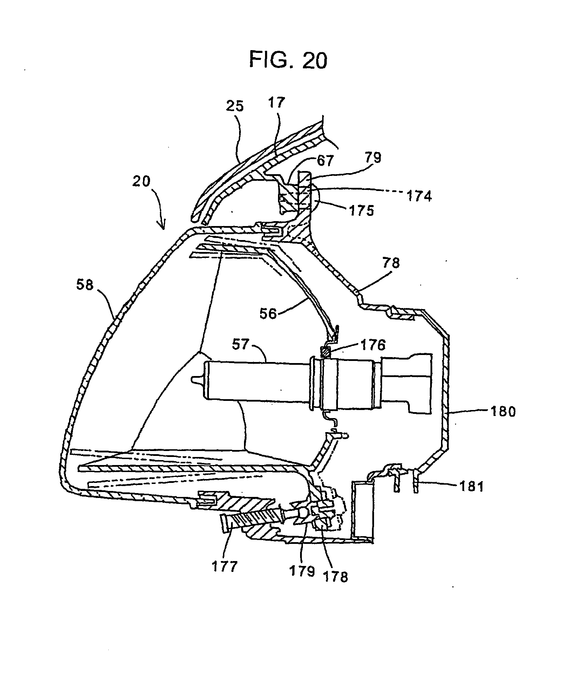

In Fig. 3, the upper edge of the head lamp 20 abuts face to face on the front edges of the meter visor 25 and the sub-covers 19, and its left, right and bottom parts abut face to face on the front cover 17. The head lamp 20 is provided with a reflector 56, and a bulb 57 is arranged in the focal position of the reflector 56. The front surface of the head lamp 20 is covered with a lens 58. The lens 58, as can be understood from Fig. 20, has a lens surface the upper end of which is positioned behind the lower end. In the front cover 17 and the rear cover 18, bosses for use in putting the covers together and bosses for use in coupling each of the covers to the head lamp 20 and the meter unit 38 are formed.

The part of the handlebar cover 16 toward the lower end is formed in a cylindrical body to surround the steering shaft 7a. In Fig. 4, bosses 59 protruding toward the front cover 17 are formed toward the lower end of the rear cover 18 constituting the rear half of the cylindrical body of the handlebar cover 16. And as shown in Fig. 3, dents 60 having holes permitting penetration of set-screws toward the rear cover 18 are formed in the front cover 17 in the positions respectively opposite the bosses 59 in the rear cover 18.

Bosses 63 protruding toward the rear cover 18 are formed on the parts of the front cover 17 to the left and right of the head lamp 20. Set-screws (not shown) that allow brackets (not shown) protruding to the left and right from the head lamp 20 to be inserted from the rear cover 18 are screwed into these bosses 63. Also on the front cover 17, bosses 17a protruding toward the rear cover 18 are formed, and the tips of bosses 18a (to be described afterwards) protruding from the rear cover 18 toward the front cover 17 are opposed to these bosses 17a. Further in the front cover 17, a boss 67 into which a set-screw (to be described afterwards with reference to Fig. 20) that can pass through a hole in a bracket 79 formed above the head lamp 20 is to be screwed is formed.

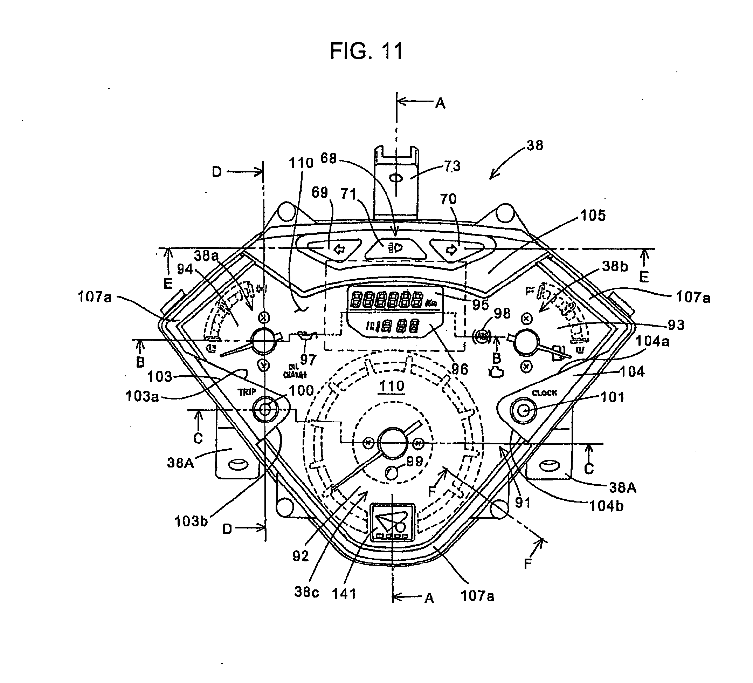

In Fig. 4, in the rear cover 18, bosses 61 protruding toward the meter unit 38 are formed in positions matching the rear side walls of the meter unit 38. Into these bosses 61, set-screws that can be inserted into holes in stays 38A (to be described afterwards with reference to Fig. 11) formed in the meter unit 38 from the meter unit 38 side are screwed. Further in the rear cover 18, bosses 62 protruding toward the front cover 17 are formed adjoining oil level check openings 49. These bosses 62 are provided to join the rear cover 18 to the handlebar 7 (the manner of joining to be described afterwards with reference to Fig. 7).

The meter visor 25 is fitted to the rear cover 18 with two set-screws 66. As shown in Fig. 3, the rear cover 18 is provided with a pair of left and right stays 77 having threaded holes into which the set-screws 66 are screwed (see Fig. 3 and Fig. 6).

Fig. 6 is a rear perspective view of the handlebar cover 16 in a state in which the meter visor 25 and the front cover 17 are taken off, and Fig. 7, a perspective view of the interior of the essential part of the rear cover 18, wherein the same reference signs as in Figs. 1 through 5 denote respectively the same elements. In Fig. 1, Fig. 5, and Fig. 6, the sub-covers 19 have stays 19a bulging out to the side facing the meter visor 25 and have hanging-down pawls 19b, 19c, and 19d bulging out downward on the sides facing the front cover 17 and the rear cover 18. The stays 19a have holes 64, set-screws 65 are passed through these holes 64 from underneath as shown in Fig. 5, and these set-screws 65 are screwed into bosses 25a provided in the meter visor 25 to join the sub-covers 19 to the meter visor 25. On the edges of the front cover 17 that face the left and right external sides of the sub-covers 19, two grooves not shown are formed in positions where the hanging-down pawls 19b and 19c can be inserted from above, and on the edge of the rear cover 18 one groove not shown is formed in a position where the hanging-down pawls 19d can be inserted from above. Therefore, an assembly integrating the meter visor 25 and the sub-covers 19 can be engaged with a front case 17 and a rear case 18 by inserting the hanging-down pawls 19b, 19c and 19d from above into the respectively matching grooves in the front case 17 and the rear case 18.

In Fig. 6, an indicator displaying section 68 is disposed above the meter unit 38. The indicator displaying section 68 is provided with turn signal indicators 69 and 70 arranged in one row in the left-right direction and the lighting state indicator 71 of the head lamp 20 arranged between the turn signal indicators 69 and 70.

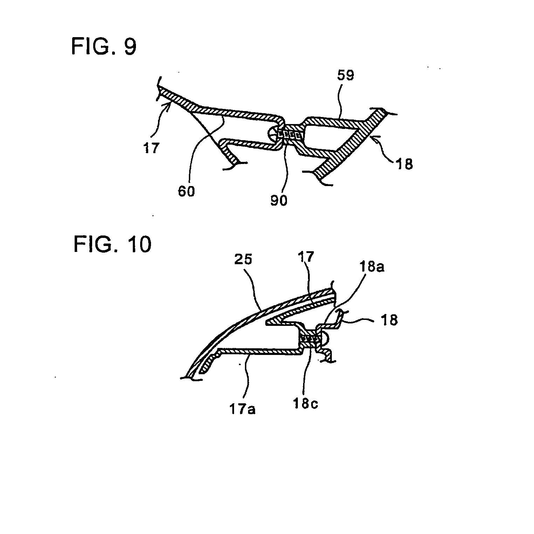

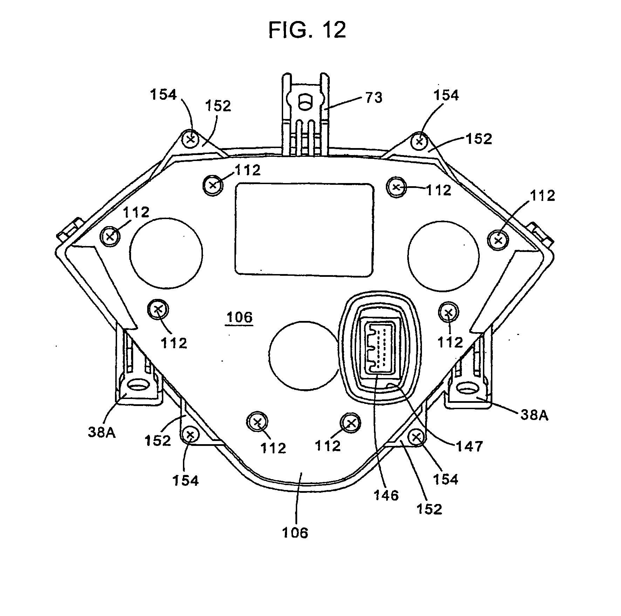

A part of the rear cover 18 has the bridge 72 extending from the left and right parts of the meter unit 38 toward the central part and crosses the area ahead of the indicator displaying section 68, and this bridge 72 is formed by the forward protrusion of a boss 74 to be used for joining the bridge 72 to the stay 73 (to be described afterwards with reference to Fig. 12) of the lower case 106 of the meter unit 38. The bridge 72 is provided with a hole 76 to let a set-screw 75 that penetrates the boss 74 and is screwed into the stay 73 and the bosses 18a disposed in two positions and having holes to allow set-screws (see Fig. 10) to penetrate to join the meter visor 25 to the bridge 72.

Farther outside the bosses 18a and 18a on the left and right, the stays 77 and 77 are erected. These stays 77 have screw holes for fitting the meter visor 25 to the rear cover 18 with the set-screws 66 and 66 (see Fig. 4).

From a head lamp housing 78 constituting part of the head lamp 20, the bracket 79 for fitting the housing 78 to the meter visor 25 protruded. Also, in each of the sub-covers 19, a wind screen stay 80 to support the wind screen 26 is provided penetrating it. The wind screen stays 80 has studs 81 in four positions forward for fitting the wind screen 26.

In Fig. 7, a bracket 82 is joined forward to the handlebar 7, and to the bracket 82, extending farther upward, another bracket 83 is joined. At the bottom end of the wind screen stays 80 penetrating the sub-covers 19, brackets 84 are joined and, by bolting these brackets 84 to the bracket 82 on the handlebar side, the wind screen 26 is joined to the handlebar 7. Reference sign 85 denotes a bolt inserted from the bracket 84 side, and reference sign 86, a nut joined to the bottom face of the bracket 82,

The bracket 83 opposes the front end face of the bosses 62 formed in the rear cover 18 and, by screwing a set-screw 87 into the bosses 62 through the bracket 83, the rear cover 18 is joined to the handlebar 7. Reference sign 88 denotes a fitting hole for the turn signal switch 43. Further, reference sign 89 denotes a linking member for linking the handlebar 7 to the steering shaft 7a.

Fig. 8 is a cross-sectional view of the bosses 63 of the front cover 17. Holes 63a to let set-screws (tapping screws) be screwed into are formed in the bosses 63.

Fig. 9 is a cross-sectional view of the dents 60 formed in the front cover 17, wherein the bosses 59 of the rear cover 18 are also shown. In the bottoms of the dents 60 of the front cover 17, holes permitting penetration of set-screws 90 are formed, while threaded holes to allow these set-screws 90 to be screwed in are formed in the bosses 59 formed in the rear cover 18. Therefore, the front cover 17 and the rear cover 18 can be joined together by inserting the set-screws 90 from the front cover 17 side and screwing them into the rear cover 18.

Fig. 10 is a cross-sectional view of the area in which the bosses 17a of the front cover 17 and the bosses 18a of the rear cover oppose each other. In Fig. 10, in the part of the front cover 17 covered by the meter visor 25, the bosses 17a protrude toward the rear cover 18. The tips of these bosses 17a oppose the tips of the bosses 18a formed on the rear cover 18 side. Holes permitting penetration of set-screws 18c are in the bosses 18a on the rear cover 18 side, and threaded holes to allow the set-screws 18c to be screwed in are formed in the bosses 17a on the front cover 17 side. This configuration enables the set-screws 18c to be screwed into the threaded holes of the bosses 17a from the rear cover 18 side through the bosses 18a and thereby to join the front cover 17 and the rear cover 18.

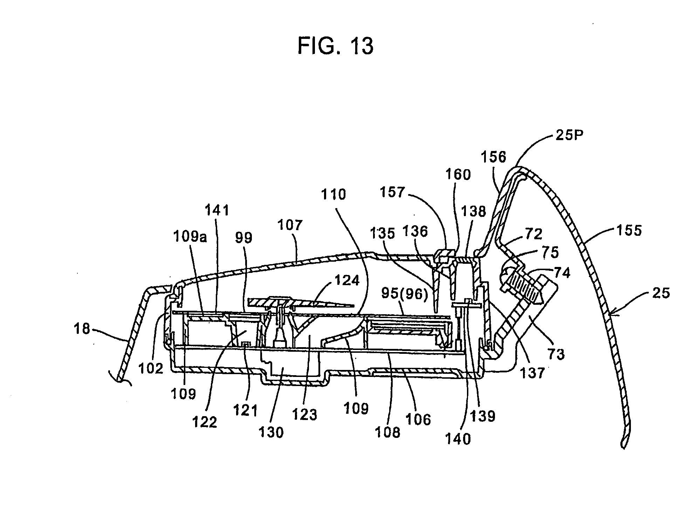

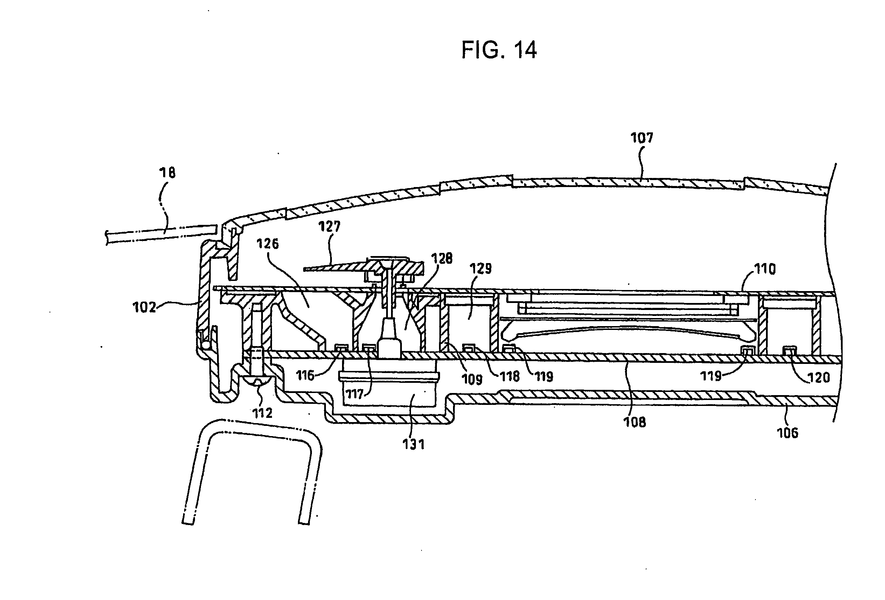

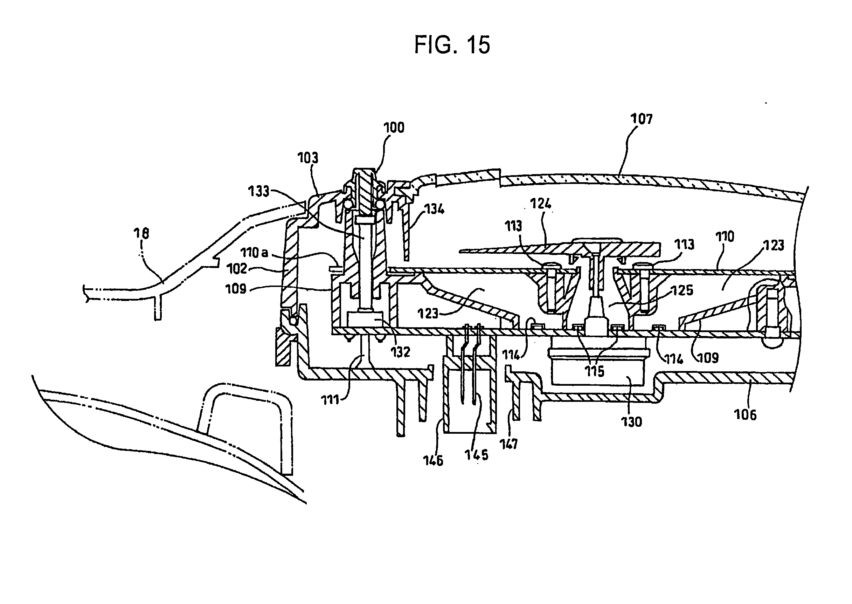

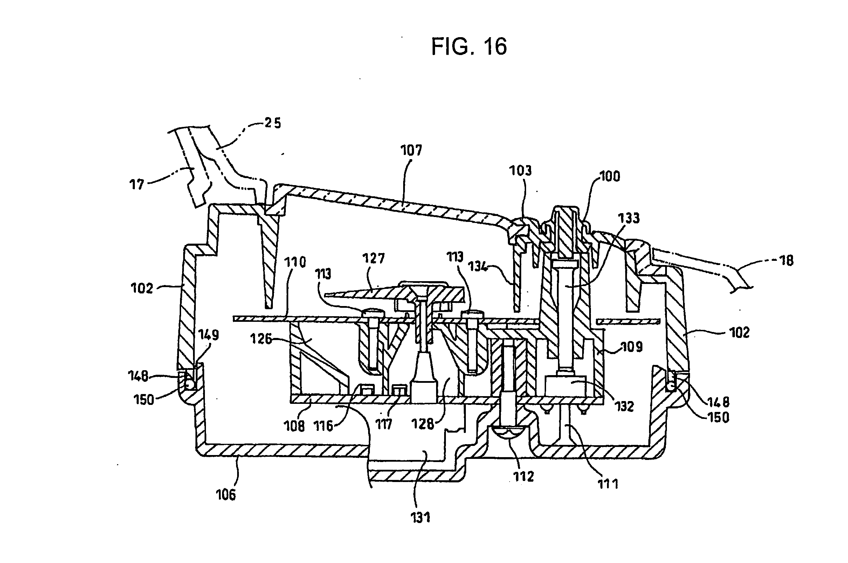

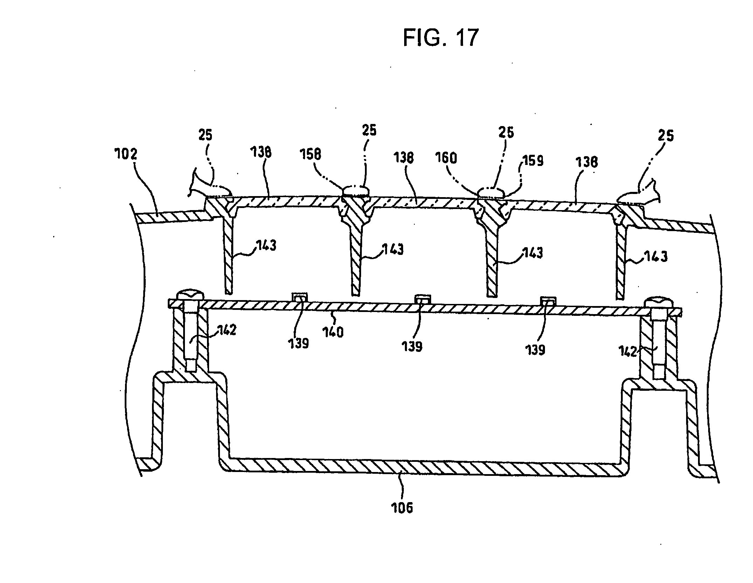

Next, the meter unit 38 and the meter visor 25 will be described in detail. Fig. 11 is a front view of the meter unit 38; Fig. 12, a bottom view of the meter unit 38; Fig. 13, a cross-sectional view between arrows A and A in Fig. 11; Fig. 14, a cross-sectional view between arrows B and B in Fig. 11; Fig. 15, a cross-sectional view between arrows C and C in Fig. 11; Fig. 16, a cross-sectional view between arrows D and D in Fig. 11; and Fig. 17, a cross-sectional view between arrows E and E in Fig. 11.

In Fig. 11, the meter unit 38 whose outer shape is formed substantially in an inverted triangle as viewed from front has an instrument section 91 and the indicator displaying section 68 positioned ahead of the instrument section 91. The instrument section 91 includes a speedometer 92, a fuel gauge 93, a cooling water thermometer 94, a mileage meter 95 and a clock 96. The speedometer 92 is arranged backward at the center of the meter unit 38 (toward the bottom in Fig. 11), the fuel gauge 93, in the right side part of the meter unit 38 toward the front (toward the top right in Fig. 11), the cooling water thermometer 94, in the left side part of the meter unit 38 toward the front (toward the top left in Fig. 11) and the mileage meter 95 and the clock 96, substantially in the middle between the fuel gauge 93 and the cooling water thermometer 94.

Therefore, the meter unit 38 has an overall shape of inverted triangle which is narrower left to right in the rear area where the speedometer 92 is arranged and broader in the front area where multiple instruments are arranged in the left-right direction; in particular, the instrument section 91 is a deformed inverted triangle having regions 38a and 38b bulging out forward left and right (upward left and right in Fig. 11) to enable the pointers of the fuel gauge 93 and the cooling water thermometer 94 to turn. And between the regions 38a and 38b, namely between the bulging-out parts, the indicator displaying section 68 is disposed.

In the instrument section 91, an oil abnormality indicator 97, an ABS indicator 98 and an immobilizer indicator 99 are provided in addition to the instruments. Further, on the left side of the upper surface of the meter unit 38, a manipulating element 100 to have the mileage meter 95 accomplish trip displaying is provided, and on the right side a manipulating element 101 for clock setting is provided.

The cases of the meter unit 38 include an upper case 102 and a lower case (to be described afterwards), and the manipulating elements 100 and 101 are, out of the upper case 102, rubber-made components to be disposed in parts 103 and 104 bulging out from the left and right edges toward the speedometer 92. Further, the upper case 102 has a bulging-out part 105 for forming the indicator displaying section 68. The bulging-out parts 103, 104 and 105 have horizontal parts (the parts 103 and 104 shown in Fig. 11) bulging inward from flanks of the meter unit 38 and reverse parts 134 hanging down, namely over a dial plate 110, from these horizontal parts 103 and 104. The horizontal parts, namely the bulging-out parts 103, 104 and 105, including the reverse parts 134, are formed of opaque members unlike a transparent lens 107 covering the instrument section 91 of the meter unit 38.

Around the lens 107 of the meter unit 38, the upper part in Fig. 11 (namely the part toward the front part of the body) adjoins the bulging-out part 105, and to the left, right and underneath there are level-gapped surfaces 107a a step lower than the upper surface of the lens 107, and the configuration is such that the edges of the handlebar cover 16 (the front cover 17 and the rear cover 18) superpose these level-gapped surfaces 107a.

On the flanks of the lower case 106 of the meter unit 38, the pair of stays 38A are provided. These stays 38A, opposing the bosses 62 (see Fig. 4) of the rear cover 18, are used when the meter unit 38 is fixed to the rear cover 18 by screwing set-screws (not shown), which can be passed from the stay 38A side, into the bosses 62.

The configuration of the meter unit will be further described with reference to cross-sectional views. In Figs. 13 through 16, the cases of the meter unit 38 include the upper case 102, the lower case 106 and the lens 107. The lens 107 and the upper case 102 are joined to each other by insert molding. The stay 73 protrudes upward in front of the lower case 106 (toward the upper right in Fig. 13), and this stay 73 is joined by using the set-screw 75 that penetrates the boss 74 formed in the bridge 72 of the rear cover 18. In this way, the meter unit 38 is caused to be held by the rear cover 18 (the bridge 72) by joining this stay 73 and the stays 38A to the rear cover 18 with set-screws.

The lens 107 is snapped onto the upper case 102, and a circuit board (hereinafter referred to as simply "the board") 108, an inner case 109 and the dial plate 110 are disposed in the space between the upper case 102 and the lower case 106.

The board 108 is held over ribs 111 protruding upward from the lower case 106 (see Fig. 15 and Fig. 16) and fitted to the lower case 106 with multiple set-screws 112. Incidentally, the set-screws 112 penetrate the board 108 and are screwed into the inner case 109. This causes the board 108 and the inner case 109 to be jointly fastened to the lower case 106. The dial plate 110 is fitted from above to the inner case 109 by using set-screws 113.

Over the board 108, LEDs (light emitting diodes) 114, 115, 116, 117, 118, 119, 120 and 121 are provided, which make clearer the readings on the dial plate 110 by irradiating the dial plate 110 with light from behind.

In Fig. 15, the LED 114, intended to irradiate with light the outer circumference of the speedometer 92, irradiates with light a region limited by an optical waveguide 123 formed in the inner case 109. The LED 115, intended to irradiate with light the inner circumference of the speedometer 92 (namely the central part of the speedometer pointer 124), irradiates with light a region limited by an optical waveguide 125 surrounded by the inner case 109.

In Fig. 15, a socket 146 provided with terminals 145 for supplying power to components on the board 108 from an external power source and outputting detection signals of a switch 132 among others is disposed on the rear surface of the board 108. The socket 146, penetrating the opening 147 for socket formed in the lower case 106, can be coupled with a plug not shown.

In Figs. 14 and 16, the LED 116, intended to illuminate the outer circumference of the cooling water thermometer 94, irradiates with light a region limited by an optical waveguide 126 surrounded by the inner case 109. The LED 117, intended to illuminate the inner circumference of the cooling water thermometer 94 (namely the central part of the cooling water thermometer pointer 127), irradiates with light a region limited by an optical waveguide 128 surrounded by the inner case 109.

In Fig. 14, the LED 118, intended to illuminate the oil abnormality indicator, irradiates with light from behind a transparent area for oil abnormality indication (the oil abnormality indicator shown in Fig. 11) 97 formed in the dial plate 110 through an optical waveguide 129 surrounded by the inner case 109. The LED 119 is a backlight for the mileage meter 95 and the clock 96. Further, the LED 120 irradiates with light the ABS indicator 98 on the dial plate 110 from behind.

In Fig. 13, the LED 121 irradiates with light from behind the immobilizer indicator 99 on the dial plate 110 through an optical waveguide 122 surrounded by the inner case 109.

The speedometer 92 and the cooling water thermometer 94 have drivers 130 and 131 and pointers 124 and 127 respectively turned by the drivers 130 and 131. The fuel gauge 93 also has a similar driver and pointer.

In Fig. 15 and Fig. 16, the board 108 is provided with the switch 132 which detects the operation to cause the speedometer 92 to accomplish trip displaying. Above the detecting section of the switch 132, a rod 133 held movably up and down in the inner case 109 is provided and, above this rod 133, the lower end of the manipulating element 100 is positioned. This configuration causes, when the manipulating element 100 is pressed from above, the manipulating element 100 to be displaced downward to press the rod 133, and this action turns on the switch 132. Though not shown, a similar switch and rod are disposed to match the manipulating element 101 for setting the clock 96.

The bulging-out part 103 of the upper case 102 in which the manipulating element 100 is disposed has a reverse part (namely a vertical wall) 134, and the presence of this vertical wall 134 prevents complexity of the appearance by keeping the manipulating elements of the switch 132, including the lower part of the manipulating element 100, the rod 133 and parts of the rod 133 supporting the inner case 109, from being visible through the lens 107.

The rod 133-supporting part of the inner case 109 has a hole vertically penetrating the dial plate 110. This hole may be a notch 110a formed inward from the outer circumference to facilitate arrangement of the manipulating elements 100 and 101 in the region of the dial plate 110.

A region 38c in which the speedometer 92 is disposed and the region 38a in which the cooling water thermometer 94 is disposed can be distinctly partitioned from each other by the vertical wall 134. Similar reverse parts are also provided in the bulging-out part 104 and the indicator displaying section 68 of the upper case 102 in which the manipulating element 101 is disposed, and have the same function as the vertical wall 134.

Front edges 103a and 104a and rear edges 103b and 104b of the bulging-out part 103 and the bulging-out part 104, continuous from lines 170, 171, 172 and 173 representing curved faces formed in the rear cover 18, present a unique appearance that gives a sense of continuity between the meter unit 38 and the rear cover 18 (see Fig. 4).

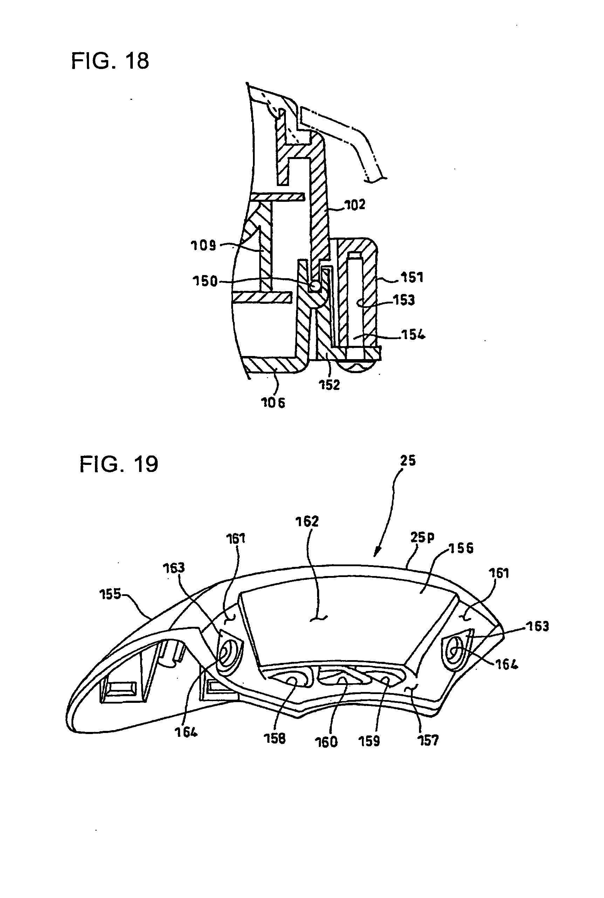

In the bulging-out part 105 of the upper case 102, a vertical wall 135 and a vertical wall 136 farther inside are disposed, and in a region surrounded by these vertical walls 135 and 136 and an external wall 137 of the upper case 102, the indicator displaying section 68 is formed. Namely, in the horizontal part of the bulging-out part 105, a lens 138 is snapped into each of three openings 158, 159 and 160 (only 160 is shown in Fig. 13; see Fig. 17 and Fig. 19 for the rest)), and underneath the lenses 138, an LED board 140 is disposed separately from the board 108 and in a higher position than the board 108, and an LED 139 is fitted on the board 140.

To add, as shown in Fig. 11 and Fig. 13, an emblem 141 is disposed on the inner case 109 in a position backward from the speedometer 92 and the immobilizer indicator 99 (downward in Fig. 11 and to the left in Fig. 13). The emblem 141 is so fitted to the bottom of a dent 109a by adhesion or otherwise as to be accommodated in the dent 109a formed in the upper part of the inner case 109. In the position matching the dent 109a, the dial plate 110 is open. And in a state in which the dial plate 110 is fitted to the inner case 109, the upper end face of the dent 109a tightly adheres to the rear surface of the dial plate 110. Therefore, the light of the LED 121 for the immobilizer indicator 99 does not leak toward the emblem 141. When fitting the emblem 141, the emblem 141 can be stuck to the dent 109a through the opening in the dial plate 110 after fitting the dial plate 110 to the inner case 109 and, moreover, the alignment of the emblem 141 is facilitated by utilizing the walls of the dent 109a.

In Fig. 17, the LED board 140 constituting the indicator displaying section 68 is fixed to the lower case 106 with set-screws 142. The lenses 138 and the LEDs 139 are provided for turn signaling and lighting of head lamp indication, respectively. The upper case 102 is provided with multiple vertical walls 143 for limiting the areas for turn signaling and lighting of head lamp indication. And the meter visor 25 having openings 158, 159 and 160 are so fitted as to cover the indicator displaying section 68 except the parts opposing the lenses 138 above. Thus the openings are so disposed matching the indicators 69 through 71, 158 and 159 as to allow the turn signal indicators 69 and 70 to be seen through and 160 to allow the lighting state indicator 71 to be seen through.

In Fig. 13 through Fig. 17, the meeting part between the upper case 102 and the lower case 106 has, with reference to Fig. 16 for instance, a reduced width part 148 formed on the lower edge of the upper case 102, a groove 149 so formed on the upper edge of the lower case 106 as to hold the reduced width part 148 from both sides, and a seal 150 that is accommodated in the bottom of the groove 149 and, in the assembled state, pressed by the reduced width part 148 toward the bottom of the groove 149.

Fig. 18 is a cross-sectional view between arrows F and F in Fig. 11 and shows the joining part between the upper case and the lower case. In Fig. 18, a boss 151 bulging out toward the outer circumference from the upper case 102 and extending toward the lower case 106 is formed, and a bracket 152 which extends down from the upper edge of the lower case 106 and whose lower end horizontally bulges outward. The lower end face of the boss 151 opposes the upper surface of the horizontally bulging-out part of the bracket 152. A screw hole 153 extending up and down is formed in the boss 151, and a hole permitting vertical penetration of a set-screw 154 is formed in the horizontally bulging-out part of the bracket 152. This configuration enables, when the set-screw 154 passed from bottom to top in the horizontally bulging-out part of the bracket 152 is screwed into the screw hole 153 of the boss 151, the upper case 102 and the lower case 106 to be assembled with each other in a sealed state via the seal 150. Incidentally, the bracket 152 including the horizontally bulging-out part and the set-screw 154 are also shown in Fig. 12.

Fig. 19 is a perspective view of the rear left part of the meter visor 25. The shape of the meter visor 25 will be further described with reference to Fig. 4 and Fig. 13 together. The meter visor 25 has a peak 25p in the vicinity of the border line 40 between the front cover 17 and the rear cover 18, and includes a front surface 155 inclining down forward from the peak 25p, a rear surface 156 inclining down backward from the peak and a rear edge 157 bulging out from the rear surface 156 toward the meter unit 38 to constitute a cover of the indicator displaying section 68. The rear surface 156 is arranged substantially vertically, and the rear edge 157 is a surface arranged substantially in parallel to the dial plate 110 of the meter unit 38. The rear edge 157 has openings 158, 159 and 160 having shapes matching the top faces the turn signal indicators 69 and 70 and the lighting state indicator 71.

The rear surface 156 includes left and right side parts 161 and 161 and a central part 162 sandwiched between the two side parts 161 and 161, and the central part 162 constitutes a dent a level lower than and ahead of the two side parts 161 and 161. And a region ahead of the openings 158 through 160 in the rear edge 157 extends as far as to the central part of the rear surface 156, namely the dent 162. To add, holes 163 for inserting the set-screws 66 and 66 and seats 164 are formed in the two side parts 161 and 161.

In this way, the presence of the dent 162 a level lower than and ahead of the indicator displaying section 68 can prevent the rear surface 156 of the meter visor 25 from intercepting the field of view when one looks at the indicator displaying section 68 and thereby enhance the visibility of indicators.

Fig. 20 is a vertical cross-sectional view of the head lamp 20. The head lamp 20 has, as described above, the reflector 56, the bulb 57, the lens 58, and the head lamp housing 78 accommodating the bulb 57 and the reflector 56. The bracket 79 protrudes at the top of the head lamp housing 78, and the boss 67 formed in the front cover 17 opposes the front surface of the bracket 79. A rubber bush boss 174 is snapped into the bracket 79, and a set-screw 175 is screwed into the boss 67 through a hole formed in this rubber bush boss 174. Brackets similar to the bracket 79 bulge out to the left and right of the head lamp housing 78, and are joined to the bosses 63 by using set-screws. The rear end of the lens 58 is joined to the front end of the head lamp housing 78.

The reflector 56 has an aiming shaft 176 extending to the left and right, and the reflector 56 and the bulb 57 supported by the reflector 56 are supported to be oscillable up and down by the aiming shaft 176 in the head lamp housing 78. Ahead of the head lamp housing 78, an aiming bolt 177 is screwed in, and the tip of this aiming bolt 177 is formed in a bulb. On the other hand, a bracket 178 bulging downward from underneath the reflector 56 is formed, and the bulb at the tip of the aiming bolt 177 is joined to a bulb receptacle 179 on this bracket 178 to form a universal joint.

In this configuration, by moving the aiming bolt 177 out of and into the head lamp housing 78, the reflector 56 can be oscillated up and down centering on the aiming shaft 176 in accordance with feeding by the aiming bolt 177, and the irradiating direction of the head lamp 20 can be adjusted accordingly. In the drawing, oscillated positions of the reflector 56 are indicated in two-dot chain lines.

A cap 180 to cover the part behind the bulb 57 is fitted in the rear part of the head lamp housing 78. Underneath the cap 180, a cylindrical cable holder 181 which permits penetration of a cable (not shown) for feeding power to the bulb 57 is formed.

Although this invention has been described so far with reference to a specific embodiment thereof, obviously the invention is not limited to this embodiment, but those skilled in the art can modify or apply it without deviating from the scope of claims. For instance, the motorcycle is not limited to a vehicle of an internal combustion engine-driven type, but the objects of application also include handlebars of a hybrid vehicle using an internal combustion engine and an electric motor or of an electromotive vehicle. Therefore, the types and numbers of switches disposed on the handlebar cover 16 or of instruments and indicators provided on the meter unit 38 can be varied to be suitable for the type of the vehicle, and the wind screen stays 80 penetrating the sub-covers 19 can be dispensed with for a vehicle having no wind screen.

The present invention is directed to provide a motorcycle of which multiple components, including the head lamp and the meter unit, fitted to the handlebar cover and arranged in the handlebar area separated from one another.

A head lamp 20 is disposed in a front cover 17 constituting a handlebar cover 16 and a meter unit 38 is disposed in a rear cover 18. A meter visor 25 is arranged between the head lamp 20 and the meter unit 38. A pair of left and right sub-covers 19 are arranged between the meter visor 25 and the front cover 17. The sub-covers 19 adjoin the head lamp 20, the meter visor 25, the meter unit 38, the front cover 17 and the rear cover 18. The sub-covers 19 extend from the left and right rear ends of the head lamp 20 to the left and right front ends of the meter unit 38, and present an appearance of linking the head lamp 20 and the meter unit 19. The sub-covers 19 are provided with screen stays 80 penetrating them vertically.

## Claims

1. A motorcycle (1) comprising:
a handlebar (7) for vehicle steering;
a handlebar cover (16) that covers the handlebar (7) except grip parts (7b) thereof;
a head lamp (20) that is fitted to a front part of the handlebar cover (16) and has a lens surface of which an upper end is positioned behind a lower end; and
a meter unit (38) that is fitted to a rear part of the handlebar cover (16) at a distance from the head lamp (20) and has a lens surface of which an upper end is positioned ahead of a lower end,
**characterized in that** a pair of left and right sub-covers (19) formed of other members than the handlebar cover (16) and arranged adjoining the head lamp (20) and the meter unit (38) are provided, and the sub-covers (19) are fitted to the handlebar cover (16) with front ends thereof positioned adjacent to upper left and right ends of the head lamp (20) and rear ends thereof positioned adjacent to upper left and right ends of the meter unit (38),
wherein: a wind screen (26) supported by wind screen stays (80) arranged vertically penetrating the sub-covers (19) is provided; and
the wind screen stays (80) have brackets (84) joined to bottom ends thereof, the brackets (84) being linked to handlebar brackets (82) joined on the handlebar (7) side.

2. The motorcycle (1) according to Claim 1,
wherein: the handlebar cover (16) includes a front cover (17) and a rear cover (18);
a meter visor (25) which is fitted between the head lamp (20) and the meter unit (38), positioned at a distance from each other, with a front edge and a rear edge thereof positioned adjoining the head lamp (20) and the meter unit (38), respectively, is provided; and
the pair of left and right sub-covers (19) are arranged to the left arid right of the meter visor (25), respectively.

3. The motorcycle (1) according to Claim 1 or 2,
wherein: the meter unit (38) has front parts bulging out ahead to the left and right;
the head lamp (20) has rear parts bulging out behind to the left and right; and
the sub-covers (19) are fitted with the front ends thereof abutting on the rear parts of the head lamp (20) and the rear ends thereof abutting on the front parts of the meter unit (38).

4. The motorcycle (1) according to Claim 3,
wherein: the meter unit (38) has an indicator displaying section (68) disposed between the front parts bulging out ahead to the left and right;
the meter visor (25) includes a rear edge (157) having a surface opposing an upper surface of the indicator displaying section (68); and
multiple openings (158, 159, 160) opposing individual displaying sections (69, 70, 71) included in the indicator displaying section (68) are formed in the rear edge (157).

5. The motorcycle (1) according to Claim 4,
wherein: the meter visor (25) has a rear surface (156) expanding ahead upward from the rear edge (157) and a front surface (155) expanding ahead downward from the rear surface (156); and
a dent (162) having a surface of which the central part is a step behind both the left and right ends of the rear surface (156) is formed in the rear surface (156).

## Patentansprüche

1. Kraftrad (1), umfassend:
einen Lenker (7) zur Fahrzeuglenkung;
eine Lenkerabdeckung (16), welche den Lenker (7) mit Ausnahme von Griffteilen (7b) desselben abdeckt;
einen Scheinwerfer (20), welcher an ein vorderes Teil der Lenkerabdeckung (16) montiert ist und eine Linsenfläche hat, von welcher ein oberes Ende hinter einem unteren Ende angeordnet ist; und
eine Messgeräteeinheit (38), welche in einem Abstand von dem Scheinwerfer (20) an ein hinteres Teil der Lenkerabdeckung (16) montiert ist und eine Linsenfläche hat, von der ein oberes Ende vor einem unteren Ende angeordnet ist,
**dadurch gekennzeichnet, dass** ein Paar von linken und rechten Nebenabdeckungen (19), welche aus anderen Elementen als der Lenkerabdeckung (16) ausgebildet sind und benachbart dem Scheinwerfer (20) und der Messgeräteeinheit (38) angeordnet sind, vorgesehen sind und die Nebenabdeckungen (19) an die Lenkerabdeckung (16) montiert sind, wobei vordere Enden davon benachbart oberen linken und rechten Enden des Scheinwerfers (20) positioniert sind, und hintere Enden davon benachbart oberen linken und rechten Enden der Messgeräteeinheit (38) positioniert sind,
wobei: eine Windschutzscheibe (26) vorgesehen ist, welche durch Windschutzscheibenstützen (80) abgestützt ist, welche die Nebenabdeckungen (19) vertikal durchdringend angeordnet sind; und die Windschutzscheibenstützen (80) Halterungen (84) haben, welche mit unteren Enden davon verbunden sind, wobei die Halterungen (84) mit Lenkerhalterungen (82) gekoppelt sind, welche auf der Seite des Lenkers (7) verbunden sind.

2. Kraftrad (1) nach Anspruch 1,
wobei: die Lenkerabdeckung (16) eine vordere Abdeckung (17) und eine hintere Abdeckung (18) umfasst;
eine Messgeräteblende (25) vorgesehen ist, welche zwischen den Scheinwerfer (20) und die Messgeräteeinheit (38), welche in einem Abstand voneinander angeordnet sind, montiert ist, wobei ein vorderer Rand und ein hinterer Rand davon jeweils benachbart dem Scheinwerfer (20) und der Messgeräteeinheit (38) angeordnet sind; und
das Paar von linken und rechten Nebenabdeckungen (19) jeweils links und rechts von der Messgeräteblende (25) angeordnet sind.

3. Kraftrad (1) nach Anspruch 1 oder 2,
wobei: die Messgeräteeinheit (38) vordere Teile hat, welche sich vorwärts nach links und rechts ausbauchen;
der Scheinwerfer (20) hintere Teile hat, welche sich zurück nach links und rechts ausbauchen; und
die Nebenabdeckungen (19) montiert sind, wobei die vorderen Enden derselben an den hinteren Teilen des Scheinwerfers (20) anliegen und die hinteren Enden derselben an den vorderen Teilen der Messgeräteeinheit (38) anliegen.

4. Kraftrad (1) nach Anspruch 3,
wobei: die Messgeräteeinheit (38) einen Blinkeranzeigeabschnitt (68) hat, welcher zwischen den vorderen Teilen angeordnet ist, welche sich vorwärts nach links und rechts ausbauchen;
die Messgeräteblende (25) einen hinteren Rand (157) umfasst, welcher eine Oberfläche hat, die einer oberen Fläche des Blinkeranzeigeabschnitts (68) gegenüberliegt; und
mehrere Öffnungen (158, 159, 160), welche einzelnen Anzeigeabschnitten (69, 70, 71) gegenüberliegen, welche in dem Blinkeranzeigeabschnitt (68) enthalten sind, an dem hinteren Rand (157) ausgebildet sind.

5. Kraftrad (1) nach Anspruch 4,
wobei: die Messgeräteblende (25) eine hintere Fläche (156) hat, welche sich von dem hinteren Rand (157) nach vorne ansteigend erweitert, und eine vordere Fläche (155) hat, welche sich von der hinteren Fläche (156) nach vorne abwärts erweitert; und
eine Vertiefung (162), welche eine Oberfläche hat, deren zentraler Teil eine Stufe hinter beiden linken und rechten Enden von der hinteren Fläche (156) ist, in der hinteren Fläche (156) ausgebildet ist.

## Revendications

1. Motocycle (1) comprenant :
un guidon (7) permettant de diriger le véhicule ;
une bulle de guidon (16) qui couvre le guidon (7) sauf les parties de poignée (7b) de celui-ci ;
un phare avant (20) qui est ajusté sur une partie avant de la bulle de guidon (16) et a une surface de lentille dont une extrémité supérieure est positionnée derrière une extrémité inférieure ; et
une unité de compteur (38) qui est ajustée sur une partie arrière de la bulle de guidon (16) à une distance du phare avant (20) et a une surface de lentille dont l'extrémité supérieure est positionnée devant une extrémité inférieure,
**caractérisé en ce qu'**une paire de sous-bulles gauche et droite (19) formées d'organes autres que la bulle de guidon (16) et agencées attenantes au phare avant (20) et à l'unité de compteur (38) est prévue, et les sous-bulles (19) sont ajustées sur la bulle de guidon (16) avec leurs extrémités avant positionnées adjacentes aux extrémités gauche et droite supérieures du phare avant (20) et leurs extrémité arrière positionnées adjacentes aux extrémités gauche et droite supérieures de l'unité de compteur (38),
dans lequel : un pare-brise (26) supporté par des montants de pare-brise (80) agencés verticalement, pénétrant les sous-bulles (19) est prévu ; et
les montants de pare-brise (80) comportent des consoles (84) jointes à leurs extrémités inférieures, les consoles (84) étant liées à des consoles de guidon (82) du côté guidon (7).

2. Motocycle (1) selon la revendication 1,
dans lequel : la bulle de guidon (16) inclut une bulle avant (17) et une bulle arrière (18) ;
une visière de compteur (25) qui est ajustée entre le phare avant (20) et l'unité de compteur (38), positionnés à une distance l'un de l'autre, avec un bord avant et un bord arrière de celle-ci positionnés attenants au phare avant (20) et à l'unité de compteur (38), respectivement, est prévue ; et
la paire de sous-bulles gauche et droite (19) est agencée à gauche et à droite de la visière de compteur (25), respectivement.

3. Motocycle (1) selon la revendication 1 ou 2, dans lequel : l'unité de compteur (38) comporte des parties avant saillant devant à gauche et à droite ;
le phare avant (20) comporte des parties arrière saillant derrière à gauche et à droite ; et
les sous-bulles (19) sont ajustées avec leurs extrémités avant en butée sur les parties arrière du phare avant (20) et leurs extrémités arrière en butée sur les parties avant de l'unité de compteur (38).

4. Motocycle (1) selon la revendication 3,
dans lequel : l'unité de compteur (38) comporte une section d'affichage d'indicateur (68) disposée entre les parties avant saillant devant à gauche et à droite ;
la visière de compteur (25) inclut un bord arrière (157) ayant une surface opposée à une surface supérieure de la section d'affichage d'indicateur (68) ; et
de multiples ouvertures (158, 159, 160) opposées à des sections d'affichage (69, 70, 71) individuelles incluses dans la section d'affichage d' indicateur (68) sont formées dans le bord arrière (157).

5. Motocycle (1) selon la revendication 4,
dans lequel : la visière de compteur (25) a une surface arrière (156) se développant devant vers le haut du bord arrière (157) et une surface avant (155) se développant devant vers le bas de la surface arrière (156) ; et
une bosse (162) ayant une surface dont la partie centrale est une marche derrière à la fois l'extrémité gauche et l'extrémité droite de la surface arrière (156) est formée dans la surface arrière (156).
